# EUROPEAN PATENT APPLICATION

(11) **EP 2 314 760 A1**
(43) Date of publication of application: **27.04.2011**
(21) Application number: 09761289.9
(22) Date of filing: 11.06.2009
(51) Int. Cl.: D06F 75/10, F16K 11/06

(54) **STEAM SUPPLY MECHANISM FOR BOILER IRON AND BOILER IRON**

(30) Priority: 13.06.2008 CN 200820102666 U
(71) Applicant: Tsann Kuen (China) Enterprise Co., Ltd, Xiamen Fujian 361006 (CN)
(72) Inventor: PAN, Chienchih, Tainan City Taiwan (TW)
(74) Representative: Garavelli, Paolo
(86) International application number: PCT/CN2009/072233
(87) International publication number: WO 2009/149664

(57) **Abstract**

The present invention is an air-feed device and boiler iron, refers to an accessory and a boiler iron with this accessory, and resolves the problem of a single air-feed. It has a three-station guiding valve whose body contains an air inlet linking the boiler and two air outlets located in two sides of the guiding valve; the first air outlet is linked to the wet vapour snoot of the iron and the second air outlet is linked to the heating plate of the boiler; one end of the valve rod of the guiding valve is in the valve body and is linked to a fixed valve plug, another end which is located relatively to the first end is led outside through an opening in the top of the body; when the valve rod lies in the first station, the valve plug is blocked between the first air outlet and the second air outlet, and the second air outlet is linked to the air inlet through the inner air of the valve body; when the valve rod lies in the second station, the valve plug is blocked between the second air outlet and the air inlet, and the first air outlet is linked to the air inlet through the inner air of body; when the valve rod lies in the third station, the valve plug is blocked in the first air outlet, the second air outlet and the air inlet, and the first air outlet and the second air outlet and the air inlet are linkedone to each other through the inner air of the body.

## Description

### FIELD OF THE INVENTION

The present invention relates to an accessory of iron, more particularly, an accessory, which is devised in boiler iron between the air outlet of boiler and the air outlet of iron: it can choose different ways of air feed; and the invention relates to a boiler iron with this accessory.

### BACKGROUND OF THE INVENTION

Presently, in a boiler iron wet vapour is provided as air by boiler parts: wet vapour heated by a heating plate forms dry vapour before it is ejected onto a fabric, and the boiler iron works. But vapour is inapplicable to iron some fiber fabric because of its high temperature: thus the wet vapour provided by the boiler should be ejected directly onto the fabric, and the boiler iron works. It is impossible to choose between two ways of air-feed, because in a boiler iron the air outlet of iron is linked to the air outlet of the boiler through a hose directly.

### SUMMARY OF THE INVENTION

The primary object of the present invention is to provide an air-feed device of a boiler iron: the device provides wet vapour directly or dry vapour which is formed from wet vapour heated by a heating board onto the fabric.

Another object of the present invention is a kind of boiler iron which works by means of choosing wet vapour and dry vapour effectively.

The technical proposal of the present inventionis: a air-feed device of boiler iron, which has a three-station guiding valve whose body contains an air inlet linking boiler and two air outlets located in two sides of a guiding valve. The first air outlet is linked to wet vapour snoot of iron and the second is linked to the heating plate of the boiler; one end of a valve rod of the guiding valve is in the valve body and is linked to with a fixed valve plug; another end which is located proximate to the first end is led outside through an opening in the top of body: when the valve rod lies in the first station, the valve plug blocks between the first air outlet and the second air outlet, and the second air outlet is linked to the air inlet through inner air of valve body; when the valve rod lies in the second station, the valve plug blocks between the second air outlet and the air inlet, and the first air outlet is linked to the air inlet through inner air of body; when the valve rod lies in the third station, the valve plug blocks during the first air outlet, the second air outlet and the air inlet, and the first air outlet, the second air outlet and the air inlet are linked one to each other through the inner air of the body.

A restoring spring used to push the valve plug is located between the valve plug and the bottom of the body in the valve body.

The second end of the valve rod is led outside through an opening on top of the valve body.

On the valve rod a gland ring is set, which seals the interval between valve rod and valve body.

The entocoele of the valve body appears as stepped foramen caecum states. The first end of the valve rod and valve plug are located in a small end all along; a salient shoulder with comparable size to inside diameters of the big end is located in the big end of the body all along, and the gland ring covers the valve rod and presses against the inner circular face of the salient shoulder.

A boiler iron comprises: an iron, a vapour boiler and a three-station guiding valve; the valve body of the guiding valve contains an air inlet linking boiler and two air outlets located on two sides of the guiding valve. The first air outlet is linked to the wet vapour snoot of iron and the second outlet is linked to the heating plate of the boiler. One end of the valve rod of the guiding valve is in the valve body and is linked to with a fixed valve plug; another end, which is located proximate to the first end, is led outside through an opening in the top of the valve body. When the valve rod lies in the first station, the valve plug blocks between the first air outlet and the second air outlet, the second air outlet is linked to the air inlet through the inner air of the body. When the valve rod lies in the second station, the valve plug blocks between the second air outlet and the air inlet, and the first air outlet is linked to the air inlet through the inner air of body; when the valve rod lies in the third station, the valve plug blocks the first air outlet, the second air outlet, and the air inlet and the first air outlet, and the second air outlet is linked to the air inlet through the inner air of the body.

In a preferred embodiment, the guiding valve mentioned above is set in the iron, and shifts the component which controls three stations to mutually shift and locate; the shift component presses against the valve rod of the guiding valve. It is easy for an operator to use the shift component of the iron directly and adjust the usage mode of the boiler iron rapidly.

In a preferred embodiment structure, to fit an operator who is fond of pushing to operation, the shift component comprises an horizontal axis which aslant moves when the button is pressed, and a locating block of stalls which is linked to the valve rod of the guiding valve. The locating block has a wavy surface to perform a sliding contact with the horizontal axis, and three troughs correspond to three stalls in the wavy surface.

Or in another preferred embodiment structure, to fit operators who like rotating to operate: the shift component has a rotating locating bowl of stalls, and there is an opening in the side wall of the locating bowl; the breach surface presses against the valve rod of the guiding valve and has at least two parallel lines, and the rim linking locating block of stalls constitutes a positioning surface corresponding to three stalls.

In the present invention, an air-feed device of the boiler iron mentioned above drives the valve plug within the valve body to stay in one of the three stations through the valve rod of the guiding valve, and supplies wet vapour by the vapour boiler through the air inlet of the guiding valve and heats it with the heating board to form dry vapour; or it ejects wet vapour provided by the vapour boiler outwards directly from the iron snoot through the first air outlet of the guiding valve; or it ejects wet vapour provided by the vapour boiler outwards through the first gas outlet and the iron snoot; at the same time the wet vapour passes through the second air outlet and gets the heating plate of the iron. Then wet vapour forms dry vapour through the heating plate before it is ejected to the fabric, and thereby works in three ways of air feed. The guiding valve has a simple structure and is operated conveniently. To coordinate the guiding valve to set up location and release of the three stations, the valve body adopts a structure in which a restoring spring pushes the valve plug in it. The valve rod has a gland ring, which seals the interval between the valve rod and the inner wall of the valve body, forbids wet vapour from entering in the air inlet to the valve body, letting it out through the interval between valve deck and valve rod, and improves the safety of guiding valve. To maintain the gland ring in an optimal status when it is pushed by the salient shoulder in the big end of the body, the valve body that adopts the stepped foramen caecum structure, coordinates with the valve rod the with salient shoulder. In the present invention, the boiler iron with air feed device mentioned above drives the valve plug within the valve body to stay in one of the three stations of the through-valve rod of the guiding valve, and supplies wet vapour with the vapour boiler through the air inlet of the guiding valve, and heats wet vapour with the heating plate to form dry vapour before it is ejected outside; or it ejects wet vapour provided by the vapour boiler directly outwards from the iron snoot through the first gas outlet of the guiding valve, or it ejects wet vapour provided by the vapour boiler outwards through the first gas outlet and the iron snoot. At the same time, the wet vapour passes through the second air outlet and gets the heating plate of the iron, then wet vapour forms dry vapour being heated before it is ejected onto the fabric, and thereby this works in three ways of air feed. The present invention can cater all kind of demands of fabric iron, and has a simple structure and is operated conveniently, and is popularized to be applied easily.

FIG.1 is a profile view of a preferred embodiment of present invention.

FIG.2 is a view of the boiler of the preferred embodiment in FIG.1.

FIG.3 is a profile view of the guiding valve of the preferred embodiment in FIG.1 in the first station.

FIG.4 is a profile view of the guiding valve of the preferred embodiment in FIG.1 in the second station.

FIG.5 is a profile view of the guiding valve of the preferred embodiment in FIG.1 in the third station.

FIG.6 is a view of the shift station structure of the preferred embodiment.

FIG.7 is another profile view of the shift station structure.

FIG.8 is a partial profile view of the iron of another preferred embodiment of the present invention.

FIG.9, which is viewed from underside, is a perspective view of the locating bowl of stalls of the preferred embodiment in FIG.8.

### DETAILED DESCRIPTION OF THE PREFERRED EMBODIMENT

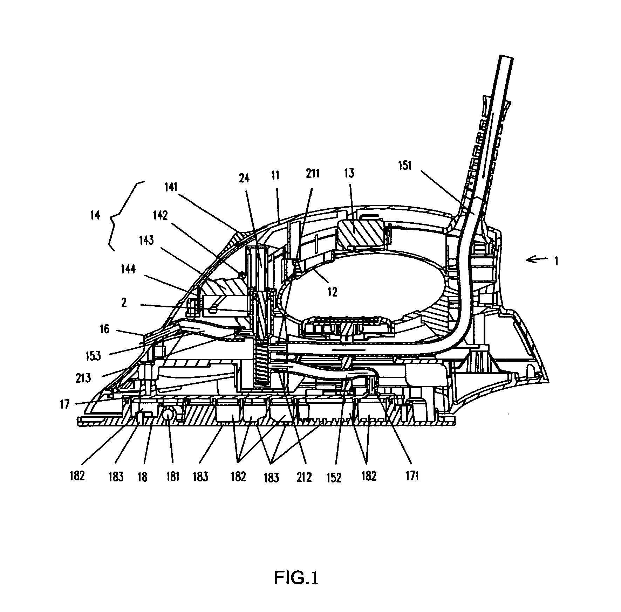

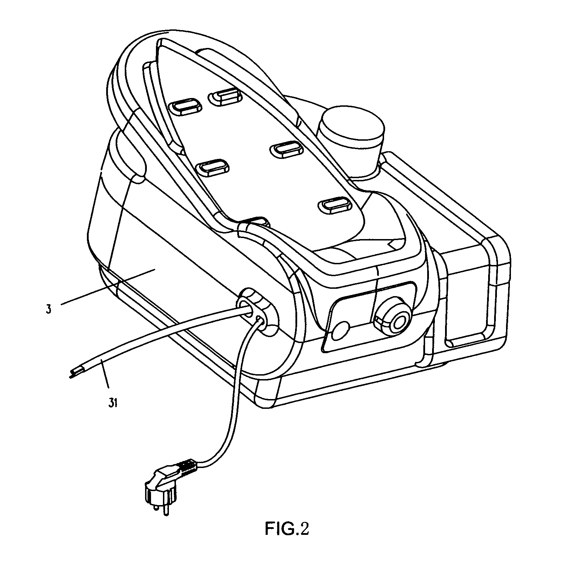

The structure of the preferred embodiment of the present invention is shown in FIG.1 and FIG.2 : a iron 1, a vapour boiler 2, a three-station guiding valve 3 and shift components 14. In a preferred embodiment, the guiding valve 3 and the shift components 14 are installed within the valve body 1. In other preferred embodiments, of course, the guiding valve 3 and the shift components 14 can be installed in the vapour boiler 2, or the guiding valve 3 and the shift components 14 can be kept away from iron 1 and vapour boiler 2 and be set up independently.

Regarding the structure of the iron parts 1, refer to FIG.1: the handle of the shell 11 of the iron parts has set a switching push-button 12 and a micro-active switch 13. The back end of the switching push-button 12 withstands the moving contacts of the micro-active switch 13. The guiding valve 2 and the shift component 14 are installed in the front upside of the shell 11. As soon as the button 141 of the shift component 14 is pushed, the shift component 14 makes the stalls of the valve rod 24 of the valve rod 2 change correspondingly, thereby the valve rod 2 optionally stays on some selected station and works according to the settled status. The air inlet 211 of the valve rod 2 is linked to the air inlet hose 151, and the first air outlet 213 is linked to the first air outlet hose 153; the second air outlet 212 of the guiding valve 2 is linked to the second air outlet hose 152. The snoot 16 which is linked to the first air outlet hose 153 is installed in the front part of the shell 11 and is linked to the first air outlet 213 of the guiding valve 2 through the first air outlet hose 153. An insulating substrate 17, which has an electric heating pipe 181 and a heating board 18 with some gas groove 182 linked one to each other, has been fixed on the lower surface of the insulating substrate 17, and is fixed in the under part of shell 11. The heating board 18 and the gas groove182 are covered by the insulating substrate 17, that forms an air compartment. The upper part of the air compartment is linked to the second air outlet hose 152 through the snoot 171 of the insulating substrate 17, and is linked to the second air outlet 152 of the valve rod 2 through the second air outlet hose 212. The lower part of the air compartment is linked to the outside through the vapour hole 183 of the heating board 18.

Regarding the structure of the vapour boiler 3, refer to FIG.2: the vapour boiler 2 has set a compound pipe which comprises a vapour pipe and an electric cable 21 .To deliver wet vapour to the iron parts 1, the vapour pipe of the compound pipe 21 is linked to the air inlet hose 151 of the iron parts 1. There are a pair of control lines that are linked to the micro-active switch 13 of the iron 1 in the electric cable within the compound pipe 21. The micro-active switch 12 controls an electromagnetic valve inside the vapour boiler 2, in order to control wet vapour produced by the vapour boiler 2 to deliver wet vapour to the iron parts 1. The electric cable of the compound pipe 21 has a power line to be linked to the electric heating pipe 181 of the heating plate 18 of the iron parts 1.

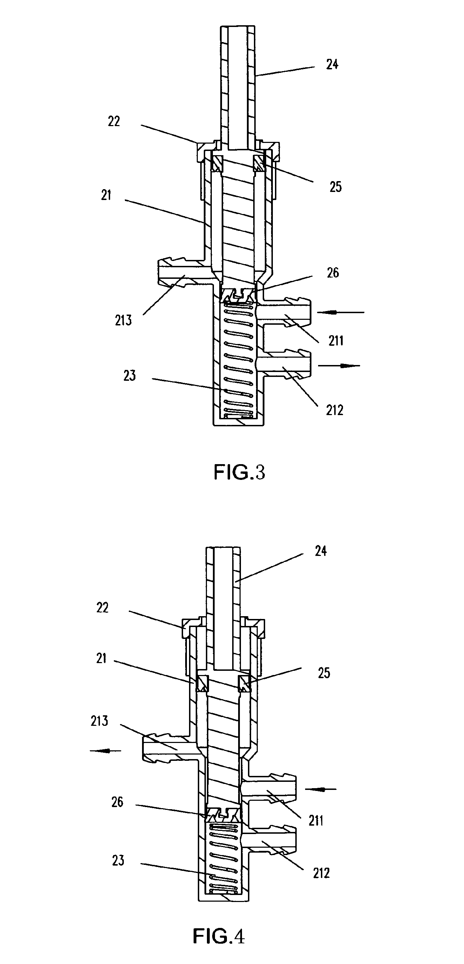

Regarding the structure of the valve rod 3, refer to FIG.3: the entocoele of the valve body appears as stepped foramen caecum states, and the depth of the small end is comparable to with the depth of the big end. An air inlet 211 is made in the side wall near the upper end of the valve body 21 to be linked to the vapour boiler 2; the second air outlet 212 is made in the side wall near the middle of the valve body 21 to be linked to the air compartment 182 on the heating plate 18; the first air outlet 213 is made in the side wall near the lower end of the big end to be linked to the wet vapour snoot 16. A valve deck 22 with a center hole is set in the opening of the big end of the valve body 21. A restoring spring is made in the little end of the valve body 21.

A salient shoulder with comparable size to the inside diameter of the big end is fixed on the middle of the valve rod 24 of the valve rod 2, and a gland ring 25 covers the valve rod and presses against the inner circular face of the salient shoulder. The small end of the valve rod 24 is linked to the fixed valve plug 26. The inside ends of the valve rod 24 and the valve plug 26 are located in the small end of the valve body all along; a restoring spring 23, used to push the valve plug 26, is located between the valve plug 26 and the bottom of the valve body 21. The salient shoulder and the gland ring 25 are in the big end of the valve rod 24 all along; the gland ring 25 seals the interval between the valve rod 24 and the valve body 21. The outside end of the valve rod 24 is led outside through a center hole in the top of the valve body 21.

Regarding the guiding valve 2, refer to FIG. 3; the valve rod lies in the first station, the restoring spring 23 is stretched at most, the salient shoulder 25 on the valve rod 24 is pressed against the valve deck 22 on the open end of the big end of the valve rod 24. The valve plug 26 in the upper part of the small end of the valve body 21 blocks between the air outlet 213 and the air inlet 211; the air outlet 212 is linked to the air inlet 211 through the internal air of the body. The vapour boiler 2 delivers wet vapour to the valve body 21 through the air inlet 211 of the valve rod 2 and provides wet vapour to the iron parts 1 through the air outlet 212; then, this wet vapour is heated by the heating plate and forms dry vapour, and the dry vapour is ejected outside through the stream holes in the bottom of the heating plate 18 of the iron parts 1: thereby this mode is used to iron wool, cotton and hemp.

When the valve rod 24 is pushed to the second station, refer to FIG.4: the restoring spring 23 is pressed partly, the valve plug 26 in the small end of the valve body 21 is blocked between the second air outlet 212 and the air inlet 211, the first air outlet 213 is linked to the air inlet 211 by air that comes from the lower part of the bulk, and the upper part of the small end of the valve body 21. The vapour boiler 2 delivers wet vapour to the valve body 21 through the air inlet 211 of the valve rod 2 and provides wet vapour to the wet vapour snoot 16 through the air outlet 213, then it ejects wet vapour outside through the snoot 16. Since the vapour boiler 3 refuses to supply power to the electric heating pipe 18, this mode is used to iron composite fibrous fabric softly.

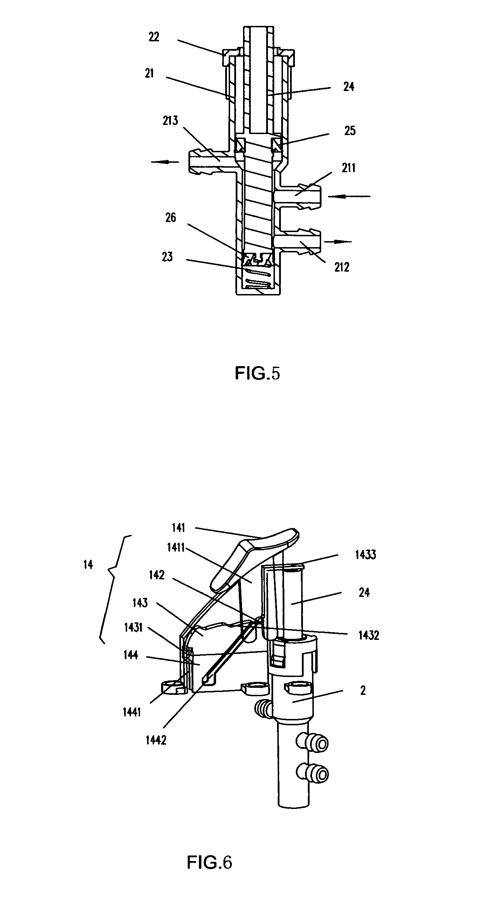

When the valve rod 24 is pushed to the third station, refer to FIG.5: the restoring spring 23 is pressed totally; the valve plug 26 lies outside the first air outlet 212, the second air outlet 213 and the air inlet 211; the air outlet 212, the air outlet 213 and the air inlet 211 are linked one to each other through the internal air that comes from the lower part of the bulk, and the middle and upper parts of the small end of the valve body 21. The vapour boiler 2 delivers wet vapour to the valve body 21 through the air inlet 211 and provides wet vapour to the wet vapour snoot 16 through the air outlet 213, then it ejects wet vapour outside through the snoot 16, and provides this wet vapour to the heating plate 18; then, this wet vapour is heated by the heating plate and forms dry vapour. The dry vapour is ejected outside through the stream holes 183 in the bottom of the heating plate 18 of the iron parts 1: thereby, this mode is used to iron wool, cotton and hemp softly.

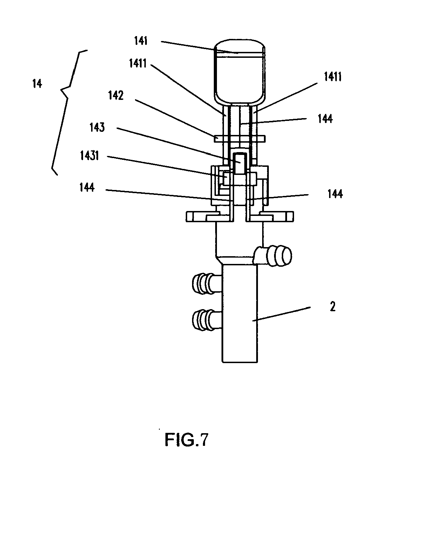

Regarding the structure of the shift component 14, refer to FIG. 6 and FIG. 7. The shift structure 14 has a bottom 141, a copper axis 142, a locating block of stalls 143 and a locating hood of stalls 144. A pair of forks, which thrust the shell 11, are located separately in two sides of the locating hood of stalls 144 in the lower part of the bottom 141. The locating hood of stalls 144 is a twisted metal plate, and the lower surface and the rear surface are opened; a pair of leading breaches 1441 of the locating blocks are set in the front part of two profiles; a pair of inclined guide channels of the copper axis 1442 are made in two sides of the front end surface. The locating block of stall 143 appears like a Z in general, and the front part of the lower horizontal edge has a plate; the upper surface of the lower horizontal edge appears wavy. Three troughs correspond to three stalls. The locating block of stalls 143 is concealed in the locating hood of stall 144, and the plate of the locating block of stalls 143 stretches outside from two leading breaches 1441; the upper horizontal edge stretches backward and presses upon the upper end of the valve rod 24. The copper axis 142 is inserted into two guide grooves 1442 of the locating hood 144, the middle of which contacts the upper surface 1432 of the lower horizontal edge of the locating block 143, two sides of which are choked in the opening of the fork 1441. Usually, the restoring spring 23 pushes the valve rod 24 upwards; the valve rod 24 keeps the locating block shifted upwards. When the bottom 141 of the shift component 14 is pressed, the fork 1411 presses the copper axis 142 downwards and the copper axis 142 pushes the locating block 143 downwards. The bottom 131 moves along the declining surface of the shell 11 upwards or downwards; at the same time, the copper axis 142 moves slantwise along the two guide grooves 1442 of the bilateral surface of the locating hood 144. There are two motive constituents that plumb mutually in this declining move: an horizontal constituent changes the position through the copper axis 142 in the upper surface of the locating block 143, a vertical constituent makes the valve rod 24 change stall correspondingly; thereby, the guiding valve 2 stays optionally in some selected station and works according to planned states.

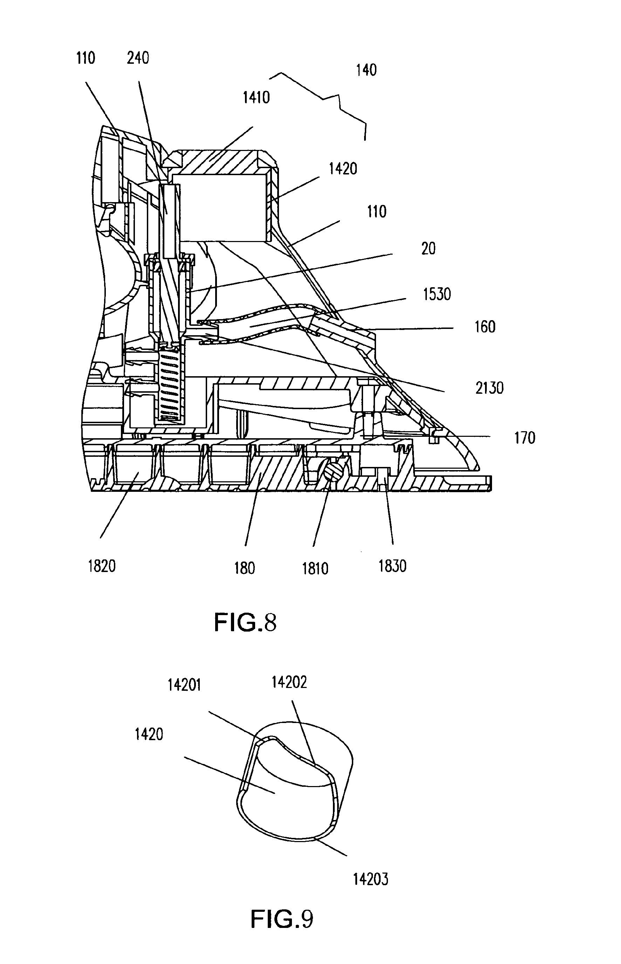

For another preferred embodiment of the present invention, refer to FIG.8: the guiding valve 20 and the shift component 140 are set in the front and upper parts of the shell 11. The shift component 140 adopts a rotating structure: when the shift component 1410 is rotating, the shift component 140 makes the valve rod 240 of the valve rod 20 change stall correspondingly; thereby, the guiding valve 2 stays optionally in some selected station and works according to planned states. The air inlet 2110 of the guiding valve 20 is linked to the inlet hose; the first air outlet 2130 is linked to the first outlet hose 1530; the second air outlet 2120 is linked to the second outlet hose. A snoot, the internal end of which is linked to the first outlet hose 1530, is set in the front part of the shell 110 and is linked to the first air outlet 2130 through the first outlet hose 1530. An insulating substrate 170, which has an electric heating pipe 1810 and a heating board 180 with some gas groove 1820 linked to each other, has been fixed on the lower surface of the insulating substrate 170, and is fixed in the lower part of the shell 110. The heating board 180 and the gas groove 1820 are covered by the insulating substrate 170, which forms an air compartment. The upper part of the air compartment is linked to the second outlet hose through the snoot of the insulating substrate 170, and is linked to the second air outlet 2120 through the second air outlet hose. The lower part of the air compartment is linked to the outside through the vapour hole 1830 of the heating board 18.

The shift component 140 has a knob 1410, and a locating bowl of stall 1420. The knob is set outside the shell 110 and is connected to the bottom of the locating bowl of stall 1420 steadily. The main body of the locating bowl 1420 intercalates the shell 110, and has a breach in its side wall; the surface of the breach presses against the valve rod 24. Referring to FIG.9: there are a flat line 14201 near the bowl bottom and a flat line 14202 near the bowl middle in the surface of the side wall breach of the locating bowl 1420; the rim of the locating bowl and both of them constitute three stalls. Usually, the restoring spring 230 presses the valve rod 240 upwards; owing to a restraint from the locating bowl 1420, the valve rod 240 is kept steadily. The locating bowl of the stall 1420 turns when the rotary knob is turned, and the flat line 14201, the flat line 14202 or the rim 14203 of the locating bowl 1420 turn at the same time; the stall of the valve rod 240 of the guiding valve 20 shifts correspondingly, thereby the guiding valve 2 stays optionally in some selected station and works according to planned states.

The above-mentioned is the optimal embodiment, while extensions of present invention are not restricted, making it possible to perform equivalent changes and modifications according to the technical proposal of the present invention and explanation, that belong to an extension of the present invention.

### INDUSTRIAL APPLICABILITY

The present invention is an air-feed device of a boiler iron; it has a three-station guiding valve and provides three way of air-feed; the structure of the guiding valve is easy, operates conveniently and safely. The boiler iron with air-feed device mentioned above drives the valve plug within the valve body to stay in one of the three stations through the valve rod of the guiding valve, and supplies wet vapour by the vapour boiler through the air inlet of the guiding valve and heats wet vapour with the heating plate to form dry vapour, then it ejects vapour outside. The present invention can cater all kind of demands of fabric iron, and has a simple structure and is operated conveniently, and is popularized to be applied easily.

## Claims

1. An air-feed device of a boiler iron, having a three-station guiding valve whose body contains an air inlet linking the boiler and two air outlets located in two sides of the guiding valve, the first air outlet being linked to the wet vapour snoot of the iron and the second air ourlet being linked to the heating plate of the boiler, one end of the valve rod of the guiding valve being in the valve body and being linked to a fixed valve plug, another end which is located relatively to the first end being led outside through an opening in the top of the body; and when the valve rod lies in the first station, the valve plug is blocked between the first air outlet and the second air outlet, and the second air outlet is linked to the air inlet through the inner air of the valve body; when the valve rod lies in the second station, the valve plug is blocked between the second air outlet and the air inlet, and the first air outlet is linked to the air inlet through the inner air of the body; when the valve rod lies in the third station, the valve plug is blocked in the first air outlet, the second air outlet and the air inlet, and the first air outlet, the second air outlet and the air inlet are linked one to each other through the inner air of the body.

2. Air-feed device according to claim 1, wherein, in said valve body, a restoring spring used to push the valve plug is located between the valve plug and the bottom of the body.

3. Air-feed device according to claim 2, wherein the second end of the valve rod is led outside through an opening in the top of the valve body.

4. Air-feed device according to claim 1, 2 or 3, wherein the valve rod has set a gland ring which seals the interval between the valve rod and the valve body.

5. Air-feed device according to claim 4, wherein the entocoele of the valve body appears as a stepped foramen caecum state, the first end of the valve rod and the valve plug being located in the small end all along, a salient shoulder with comparable size to the inside diameters of the big end being located in the big end of the body all along, and the gland ring covering the valve rod and pressing against the inner circular face of the salient shoulder.

6. A boiler iron comprising an iron, a vapour boiler and a three-station guiding valve, the valve body of the guiding valve containing an air inlet linking the boiler and two air outlets located in two sides of the guiding valve, the first air outlet being linked to the wet vapour snoot of the iron and the second air outlet being linked to the heating plate of the boiler, one end of the valve rod of the guiding valve being in the valve body and being linked to a fixed valve plug, another end which is located relatively to the first end being led outside through an opening in the top of the valve body; when the valve rod lies in the first station, the valve plug is blocked between the first air outlet and the second air outlet, and the second air outlet is linked to the air inlet through the inner air of the body; when the valve rod lies in the second station, the valve plug is blocked between the second air outlet and the air inlet, and the first air outlet is linked to the air inlet through the inner air of the body; when the valve rod lies in the third station, the valve plug is blocked in the first air outlet, the second air outlet and the air inlet, and the first air outlet and the second air outlet are linked to the air inlet through the inner air of the body.

7. Boiler iron according to claim 6, wherein the guiding valve is set in the iron, and the shift component which controls three stations to mutually shift and locate the shift component presses against the valve rod of the guiding valve.

8. Boiler iron according to claim 7, wherein the shift component comprises an horizontal axis which aslant moves when the button is pressed, and a locating block of stalls which is linked to the valve rod of the guiding valve, the locating block having a wavy surface for the sliding contact with the horizontal axis, three troughs corresponding to three stalls in the wavy surface.

9. Boiler iron according to claim 7, wherein the shift component has a rotating locating bowl of stalls, and there is an opening in the side wall of the locating bowl, the surface of the breach pressing against the valve rod of the guiding valve and having two parallel lines at least, the rim linking the locating block of stalls being a positioning surface corresponding to three stalls.
